# EUROPEAN PATENT SPECIFICATION

(11) **EP 3 214 271 B1**
(45) Date of publication and mention of the grant of the patent: **01.04.2020**
(21) Application number: 17156201.0
(22) Date of filing: 15.02.2017
(51) Int. Cl.: F01D 5/18

(54) **ROTOR BLADE TRAILING EDGE COOLING**
ROTORSCHAUFEL MIT HINTERKANTENKÜHLUNG
AUBE DE TURBINE AVEC REFROIDISSEMENT AU BORD ARRIÈRE

(30) Priority: 17.02.2016 US 201615045553
(43) Date of publication of application: 06.09.2017
(73) Proprietor: General Electric Company, Schenectady, NY 12345 (US)
(72) Inventor: BENSON, Adebukola O., Greenville, SC 29615 (US); HOGBERG, Nicholas Alvin, Greenville, SC 29615 (US); ZHANG, Xiuzhang James, Greenville, SC 29615 (US); ITZEL, Gary Michael, Greenville, SC 29615 (US); BANAKAR, Mohankumar, 560066 Bangalore (IN)
(74) Representative: BRP Renaud & Partner mbB Rechtsanwälte Patentanwälte Steuerberater

(56) References cited:
- EP-A1- 2 713 012
- EP-A2- 0 851 098
- EP-A2- 2 489 838
- US-A- 5 503 529
- US-A1- 2014 369 852
- US-B1- 8 827 647

## Description

### FIELD OF THE INVENTION

The present disclosure generally relates to a rotor blade for a gas turbine. More particularly, this disclosure relates to a cooling circuit for a rotor blade.

### BACKGROUND OF THE INVENTION

A gas turbine generally includes a compressor section, a combustion section, a turbine section, and an exhaust section. The compressor section progressively increases the pressure of a working fluid entering the gas turbine and supplies this compressed working fluid to the combustion section. The compressed working fluid and a fuel (e.g., natural gas) mix within the combustion section and burn in a combustion chamber to generate high pressure and high temperature combustion gases. The combustion gases flow from the combustion section into the turbine section where they expand to produce work. For example, expansion of the combustion gases in the turbine section may rotate a shaft connected, e.g., to a generator to produce electricity. The combustion gases then exit the gas turbine via the exhaust section.

The turbine section includes a plurality of turbine rotor blades, which extract kinetic energy and/or thermal energy from the combustion gases flowing therethrough. These rotor blades generally operate in extremely high temperature environments. In order to achieve adequate service life, the rotor blades typically include an internal cooling circuit. During operation of the gas turbine, a cooling medium such as compressed air is routed through the internal cooling circuit to cool the rotor blade.

In some configurations, the cooling medium may exit the cooling circuit through one or more passages in a trailing edge of the rotor blade. Nevertheless, conventional trailing edge cooling passage arrangements may produce undesirable thermal gradients in the rotor blade or otherwise insufficiently cool the rotor blade.

US2014/369852A1 discloses a cooled turbine blade with double compound angled holes and slots exiting a side wall of the blade. US8827647B1 discloses a turbine rotor blade with four-pass aft flowing serpentine flow cooling circuit. US5503529A disclosed another cooled airfoil blade arrangement. EP0851098A2 discloses a method of improving the cooling effectiveness of gaseous coolant stream which flows through at least one passage hole.

### BRIEF DESCRIPTION OF THE INVENTION

Aspects and advantages of the invention are set forth below in the following description, or may be obvious from the description, or may be learned through practice of the invention.

In one aspect, the present disclosure is directed to a rotor blade for a gas turbine engine according to claim 1.

Another aspect of the present disclosure is directed to a gas turbine according to claim 11.

Those of ordinary skill in the art will better appreciate the features and aspects of such embodiments, and others, upon review of the specification.

### BRIEF DESCRIPTION OF THE DRAWINGS

A full and enabling disclosure of the present invention is set forth more particularly in the remainder of the specification, including reference to the accompanying figures, in which:
FIG. 1 is a schematic view of an exemplary gas turbine in accordance with the embodiments disclosed herein;
FIG. 2 is a perspective view of an exemplary rotor blade that may be incorporated in the gas turbine shown in FIG. 1 in accordance with the embodiments disclosed herein;
FIG. 3 is an alternate perspective view of the exemplary rotor blade shown in FIG. 2, further illustrating various features thereof;
FIG. 4 is a cross-sectional view of the exemplary rotor blade shown in FIGS. 2 and 3 taken generally about line 4-4 in FIG. 3, illustrating portions of a cooling circuit;
FIG. 5 is a cross-sectional view of a trailing edge of the rotor blade shown in FIG. 4, illustrating a plurality of outlet passages defined thereby;
FIG. 6 is a cross-sectional view of a portion of the trailing edge shown in FIG. 5, illustrating two outlet passages and the relative diameters and angles of each;
FIG. 7 is a cross-sectional view of an alternate embodiment of the portion of the trailing edge shown in FIG. 6, illustrating two outlet passages and the relative angles of each;
FIG. 8A is a front view of one embodiment of one of the plurality of outlet passages, illustrating a circular cross-section thereof;
FIG. 8B is a front view of an alternate embodiment of the one of the plurality of outlet passages, illustrating an oval cross-section thereof;
FIG. 8C is a front view of another embodiment of one of the plurality of outlet passages, illustrating a cross-section thereof having four straight portions; and
FIG. 8D is a front view of a further embodiment of one of the plurality of outlet passages, illustrating a cross-section thereof having two straight portions.

### DETAILED DESCRIPTION OF THE INVENTION

Reference will now be made in detail to present embodiments of the invention, one or more examples of which are illustrated in the accompanying drawings. The detailed description uses numerical and letter designations to refer to features in the drawings. Like or similar designations in the drawings and description have been used to refer to like or similar parts of the invention. As used herein, the terms "first", "second", and "third" may be used interchangeably to distinguish one component from another and are not intended to signify location or importance of the individual components. The terms "upstream" and "downstream" refer to the relative direction with respect to fluid flow in a fluid pathway. For example, "upstream" refers to the direction from which the fluid flows, and "downstream" refers to the direction to which the fluid flows.

Each example is provided by way of explanation of the invention, not limitation of the invention. In fact, it will be apparent to those skilled in the art that modifications and variations can be made in the present invention without departing from the scope or spirit thereof. For instance, features illustrated or described as part of one embodiment may be used on another embodiment to yield a still further embodiment. Thus, it is intended that the present invention covers such modifications and variations as come within the scope of the appended claims and their equivalents. Although an industrial or land-based gas turbine is shown and described herein, the present invention as shown and described herein is not limited to a land-based and/or industrial gas turbine unless otherwise specified in the claims. For example, the invention as described herein may be used in any type of turbine including but not limited to a steam turbine or marine gas turbine.

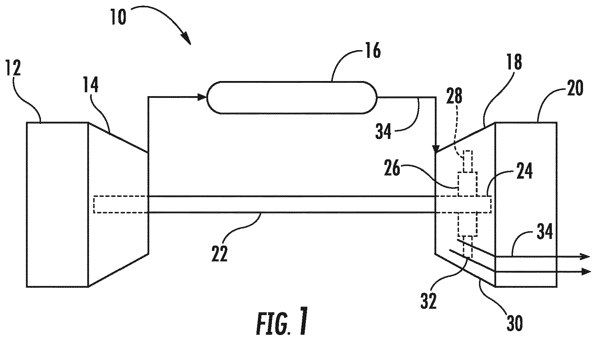

Now referring to the drawings, wherein identical numerals indicate the same elements throughout the figures, FIG. 1 schematically illustrates a gas turbine system 10. It should be understood that the turbine system 10 of the present disclosure need not be a gas turbine system 10, but rather may be any suitable turbine system, such as a steam turbine system or other suitable system. The gas turbine system 10 may include an inlet section 12, a compressor section 14, a combustion section 16, a turbine section 18, and an exhaust section 20. The compressor section 12 and turbine section 18 may be coupled by a shaft 22. The shaft 22 may be a single shaft or a plurality of shaft segments coupled together to form shaft 22.

The turbine section 18 may generally include a rotor shaft 24 having a plurality of rotor disks 26 (one of which is shown) and a plurality of rotor blades 28 extending radially outwardly from and interconnected to the rotor disk 26. Each rotor disk 26 in turn, may be coupled to a portion of the rotor shaft 24 that extends through the turbine section 18. The turbine section 18 further includes an outer casing 30 that circumferentially surrounds the rotor shaft 24 and the rotor blades 28, thereby at least partially defining a hot gas path 32 through the turbine section 18.

During operation, a working fluid such as air flows through the inlet section 12 and into the compressor section 14, where the air is progressively compressed to provide pressurized air to the combustors (not shown) in the combustion section 16. The pressurized air is mixed with fuel and burned within each combustor to produce combustion gases 34. The combustion gases 34 flow through the hot gas path 32 from the combustor section 16 into the turbine section 18, wherein energy (kinetic and/or thermal) is transferred from the combustion gases 34 to the rotor blades 28, thus causing the rotor shaft 24 to rotate. The mechanical rotational energy may then be used to power the compressor section 14 and/or to generate electricity. The combustion gases 34 exiting the turbine section 18 may then be exhausted from the gas turbine 10 via the exhaust section 20.

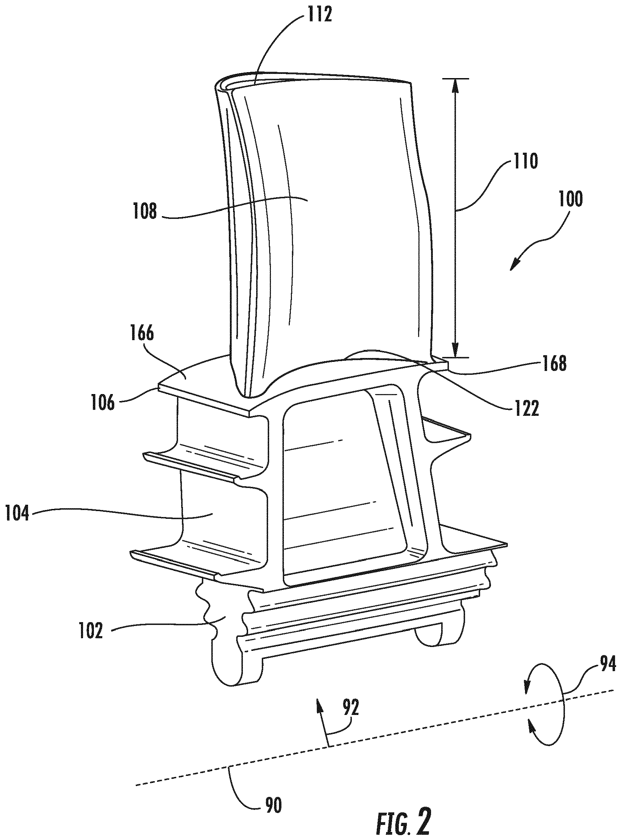

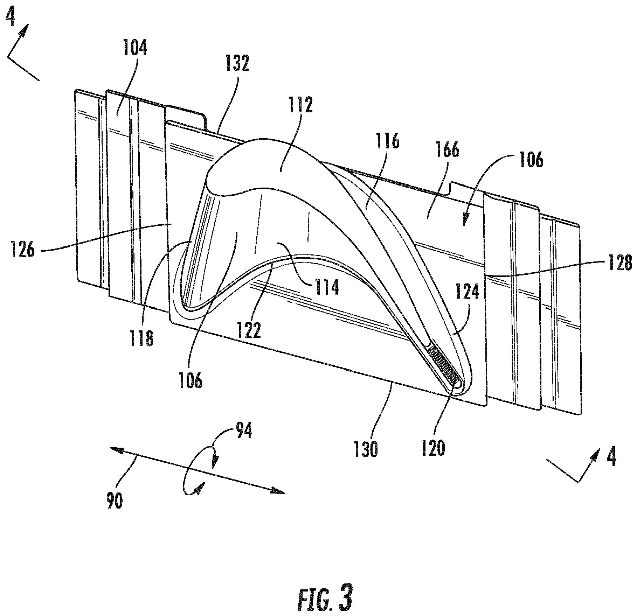

FIGS. 2-4 are various views of an exemplary rotor blade 100, which may incorporate one or more embodiments disclosed herein and may be incorporated into the turbine section 18 of the gas turbine 10 in place of rotor blade 28 as shown in FIG. 1. As illustrated in FIGS. 2-4, the rotor blade 100 defines an axial direction 90, a radial direction 92, and a circumferential direction 94. The radial direction 92 extends generally orthogonal to the axial direction 90, and the circumferential direction 94 extends generally concentrically around the axial direction 90.

As shown in FIG. 2, the rotor blade 100 generally includes a root portion 102, which extends radially inwardly from a shank portion 104. The root portion 102 may interconnect or secure the rotor blade 100 to the rotor disk 26 (FIG. 1). In some embodiments, for example, the root portion 102 may have a dovetail configuration. The root portion 102 and the shank portion 104 may collectively be referred to as the connection portion of the rotor blade 100.

As best illustrated in FIGS. 2-4, the rotor blade 100 includes a platform 106, which generally serves as a radially inward flow boundary for the combustion gases 34 flowing through the hot gas path 32 of the turbine section 18 (FIG. 1). More specifically, the platform 106 includes a radially inner surface 168 radially spaced apart from a radially outer surface 166. The radially inner surface 168 of the platform 106 couples to the shank 104. As such, the shank 104 extends radially inwardly from the radially inner surface 168 of the platform 106. The platform 106 also includes a leading edge portion 126 axially spaced apart from a trailing edge portion 128. The leading edge portion 126 is positioned into the flow of combustion gases 34, and the trailing edge portion 128 is positioned downstream from the leading edge portion 126. Furthermore, the platform 106 includes a pressure-side slash face 130 circumferentially spaced apart from a suction-side slash face 132.

The rotor blade 100 further includes an airfoil 108 that extends radially outwardly from the platform 106 to an airfoil tip 112. As such, the airfoil tip 112 may generally define the radially outermost portion of the rotor blade 100. The airfoil 108 connects to the platform 106 at an airfoil root 122 (i.e., the intersection between the airfoil 108 and the platform 106). In some embodiments, the airfoil root 122 may include a radius or fillet 124 that transitions between the airfoil 108 and the platform 106. In this respect, the airfoil 108 defines an airfoil span 110 extending between the airfoil root 122 and the airfoil tip 112. The airfoil 100 also includes a pressure-side wall 114 and an opposing suction-side wall 116. The pressure-side wall 114 and the suction-side wall 116 are joined together or interconnected at a leading edge portion 118 of the airfoil 108, which is oriented into the flow of combustion gases 34. The pressure-side wall 114 and the suction-side wall 116 are also joined together or interconnected at a trailing edge portion 120 of the airfoil 108, which is spaced downstream from the leading edge portion 118. The pressure-side wall 114 and the suction-side wall 116 are continuous about the leading edge portion 118 and the trailing edge portion 120. The pressure-side wall 114 is generally concave, and the suction-side wall 116 is generally convex.

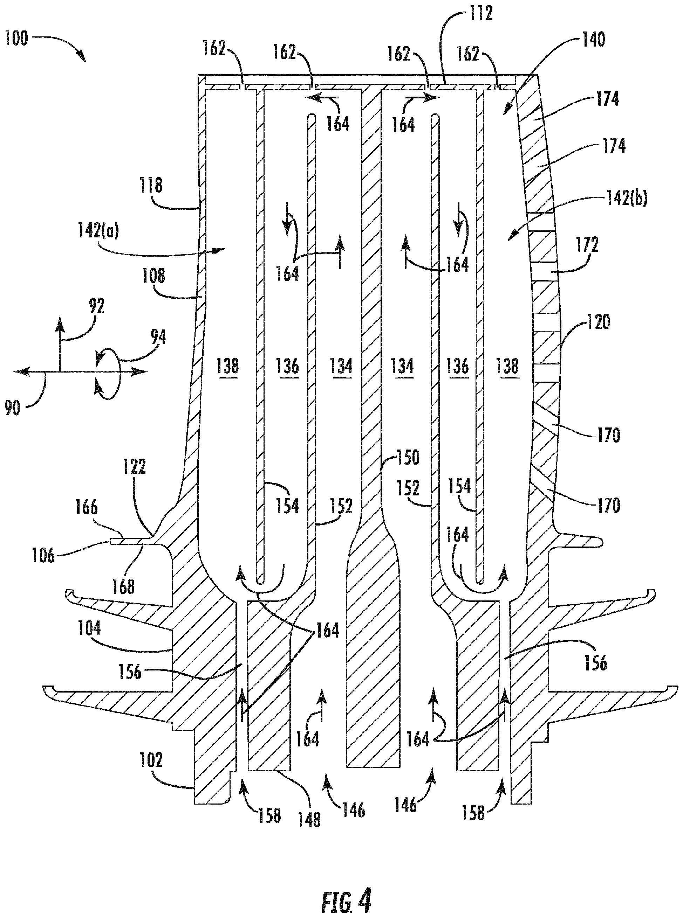

Referring to FIG. 4, the rotor blade 100 defines a cooling circuit 140. More specifically, the cooling circuit 140 includes one or more inlet plena 146 defined by the root portion 102 and/or the shank portion 104. The one or more inlet plena 146 supply a cooling medium (e.g., compressed air bled from the compressor section 14) to one or more serpentine passages 142 defined by the airfoil 108, the platform 106, and/or the shank portion 104. The cooling medium flows from at least one of the one or more serpentine passages 142 into a plurality of outlet passages (e.g., one or more radially inwardly angled outlet passages 170, one or more radially straight outlet passages 172, and/or one or more radially outwardly angled outlet passages 174) defined by the trailing edge portion 120 of the airfoil 108. The cooling medium exits the rotor blade 100 through the plurality of outlet passages 170, 172, 174 into the hot gas path 32 (FIG. 1). In this respect, the cooling medium flows through the root portion 102, the shank portion 104, the platform 106, and the airfoil 108.

FIG. 4 illustrates one embodiment of the cooling circuit 140 that includes a first or forward serpentine passage 142(a) and a second or aft serpentine passage 142(b) axially separated from the first serpentine passage 142(a) by a first wall 150. Although, the cooling circuit 140 may include more or less serpentine passages 142 as is necessary or desired. Each of the first and the second serpentine passages 142(a), 142(b) includes a first or inner channel 134 in fluid communication with the inlet plenum 146. A second or central channel 136 fluidly couples to the first channel 134 proximate the airfoil tip 112. In this respect, a second wall 152 extending radially outwardly from the shank portion 104 separates the first and the second channels 134, 136. A third or outer channel 138 fluidly couples to the second channel 136 proximate the shank portion 104. As such, a third wall 154 extending radially inwardly from the airfoil tip 112 separates the second and the third channels 136, 138. The third channel 136 of the second serpentine passage 142(b) is in fluid communication with the plurality of outlet passages 170, 172, 174. The third channel 138 of the first serpentine passage 142(a) may be in fluid communication with the one or more outlets (not shown) defined by the platform 106. In other embodiments, the first and the second serpentine passages 142(a), 142(b) may include more or less channels as is necessary or desired and may have other configurations as well.

The serpentine passages 142 may optionally include other features as well. For example, each of the first and/or the second serpentine passages 142(a), 142(b) may optionally include a refresher passageway 156 fluidly coupled to the third channel 138. The refresher passageway 156 receives fresh cooling medium via an inlet 158 and provides this fresh cooling medium to third channel 138. In some embodiments, the first and/or second serpentine passages 142(a), 142(b) may be in fluid communication with one or more outlet ports 162 defined by the airfoil tip 112 or one or more outlets (not shown) defined by the platform 106.

The cooling medium, such as cooling air 164, flows through the first and the second serpentine passages 142(a), 142(b) of the cooling circuit 140 to cool the rotor blade 100. More specifically, the cooling air 164 enters the inlet plena 164 of the first and the second serpentine passages 142(a), 142(b). The cooling flow 164 flows radially outwardly through the first channels 134 in each of the first and the second serpentine passages 142(a), 142(b). The cooling air 164 then enters the second channels 136, where the cooling air 164 flows radially inward. The cooling air 164 then flows radially outwardly in the third channels 138. The cooling air 164 may also enter the third channels 138 through the refresher passageways 156 if included. The cooling air 164 then exits the second serpentine passage 142(b) through the plurality of outlet passages 170, 172, 174 defined by the trailing edge portion 120 of the airfoil 108 and optionally through the outlet ports 162 in the airfoil tip 112 and/or the outlets in the platform 106. The cooling air 164 may exit the first serpentine passage 142(a) through the outlet ports 162 in the airfoil tip 112 and/or the outlets in the platform 106.

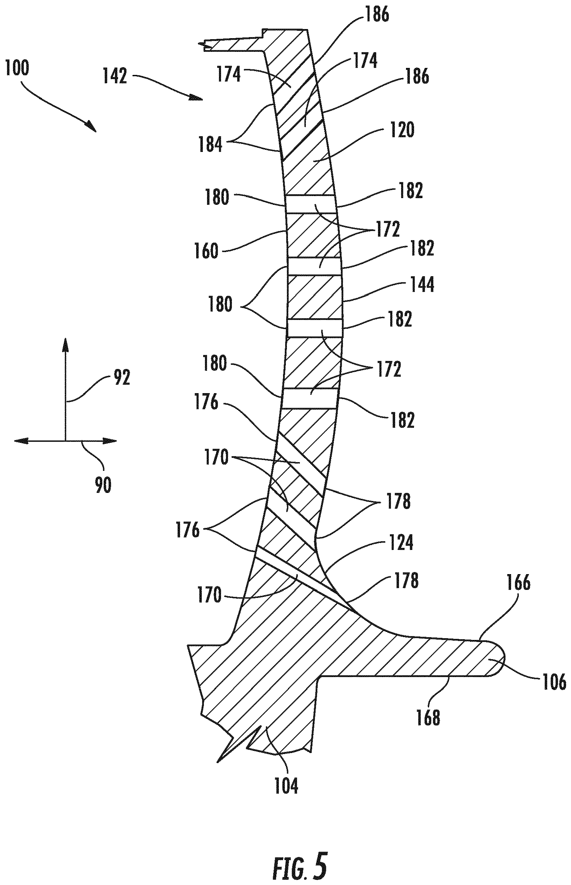

FIG. 5 illustrates one embodiment of the trailing edge portion 120 of the airfoil 108, which includes the one or more radially inwardly angled outlet passages 170, the one or more radially straight outlet passages 172, and/or the one or more radially outwardly angled outlet passages 174. More specifically, the trailing edge portion 120 illustrated in FIG. 5 includes three radially inwardly angled outlet passages 170, four radially straight outlet passages 172, and two radially outwardly angled outlet passages 174. Nevertheless, the trailing edge portion 120 may include more or less radially inwardly angled outlet passages 170, radially straight outlet passages 172, and/or radially outwardly angled outlet passages 174 as is necessary or desired. In fact, the trailing edge portion 120 may include any number of the radially inwardly angled outlet passages 170, the radially straight outlet passages 172, and the radially outwardly angled outlet passages 174 so long as the trailing edge portion 120 includes at least one radially inwardly angled outlet passage 170. Including at least one radially inwardly angled outlet passage 170 that extends through the trailing edge portion 120 improves the cooling of the rotor blade 100 and creates more desirable thermal gradients in the platform 106.

In some embodiments, the one or more radially inwardly angled outlet passages 170 are positioned radially inward from the one or more radially straight outlet passages 172, which are positioned radially inward from the one or more radially outwardly angled outlet passages 174. As illustrated in FIG. 5, for example, the three radially inwardly angled outlet passages 170 are positioned radially inwardly from the four radially straight outlet passages 172. Furthermore, the four radially straight outlet passages 172 are positioned radially inwardly of the two radially outwardly angled outlet passages 174. The radially innermost outlet passage in some embodiments is the one of the radially inwardly angled outlet passages 170. In fact, one or more of the radially inwardly angled outlet passages 170 may be partially defined by and extend through the radius 124 and/or the platform 106 in some embodiments as illustrated in FIG. 5. Nevertheless, the radially inwardly angled outlet passages 170, the radially straight outlet passages 172, and the radially outwardly angled outlet passages 174 may be arranged radially along the trailing edge portion 120 in any suitable manner or arrangement.

As illustrated in FIGS. 5-7, each of the outlet passages 170, 172, 174 extend between an entrance defined by an inner surface 160 of the trailing edge portion 120 and an exit defined by an outer surface 144 of the trailing edge portion 120. More specifically, each of the one or more radially inwardly angled outlet passages 170 extends between an entrance 176 defined by the inner surface 160 and an exit 178 defined by the outer surface 144 at a radially inward angle. In this respect, the exit 178 is radially inwardly offset from the entrance 176. Each of the one or more radially straight outlet passages 172 extends between an entrance 180 defined by the inner surface 160 and an exit 182 defined by the outer surface 144 in a manner such that the exit 182 is radially aligned with the entrance 180. Each of the one or more radially outwardly angled outlet passages 174 extends between an entrance 184 defined by the inner surface 160 and an exit 186 defined by the outer surface 144 at a radially outward angle. In this respect, the exit 186 is radially outwardly offset from the entrance 184.

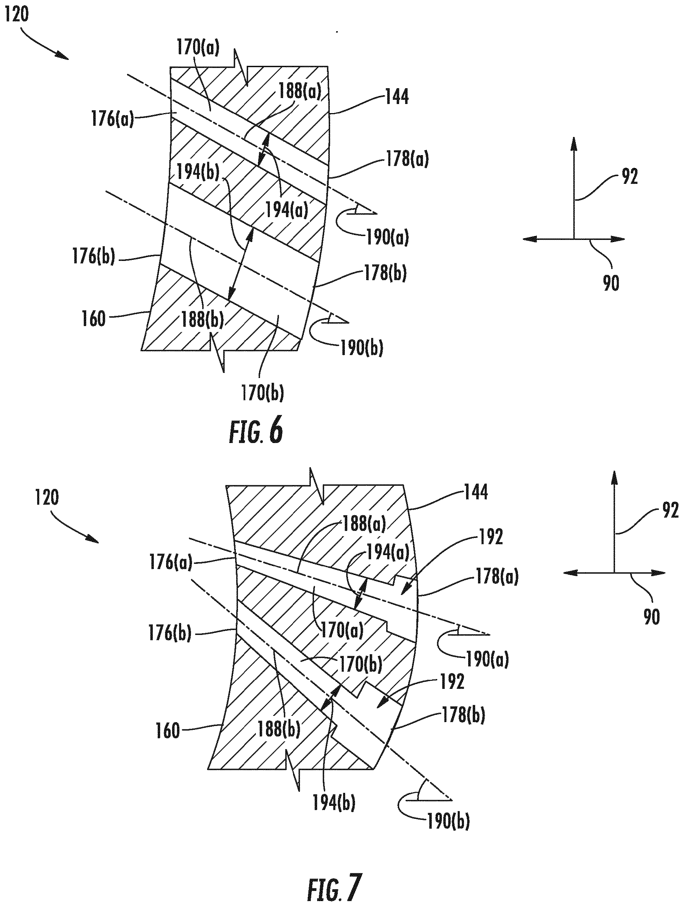

FIGS. 6 and 7 show embodiments of the relative orientation of the outlet passages 170 with respect to each other. More specifically, FIGS. 6 and 7 illustrate a first radially inwardly angled outlet passage 170(a) extending along a first centerline 188(a) between a first entrance 176(a) and a first exit 178(a) at a first radially inward angle 190(a). Furthermore, a second radially inwardly angled outlet passage 170(b) extends along a second centerline 188(b) between a second entrance 176(b) and a second exit 178(b) at a second radially inward angle 190(b). In the embodiment shown in FIG. 6, the angles 190(a) and 190(b) are the same. Nevertheless, the angles 190(a) and 190(b) in the embodiment shown in FIG. 7 are different. In some embodiments, the angles 190(a), 190(b), etc. may decrease in increments in the radially outward direction (e.g., the angle 190(b) is two degrees greater than the angle 190(a) and the adjacent angle (not shown) radially inward of the angle 190(b) is four degrees greater than the angle 190(b), etc.).

The first and the second outlet passages 170(a), 170(b) respectively include a first diameter 194(a) and a second diameter 194(b). In the embodiment shown in FIG. 6, the first diameter 194(a) is different (i.e., shorter) than the second diameter 194(b). In the embodiment shown in FIG. 7, however, the first diameter 194(a) is the same as the second diameter 194(b).

One or more of the outlet passages 170 may define a coating collector 192 to prevent a coating (e.g., a thermal barrier coating) applied to the rotor blade 100 from obstructing the flow of cooling medium to the plurality of outlet passages 170. As illustrated in FIG. 7, the coating collector 192 is an enlarged cavity positioned circumferentially around exit 178 of the outlet passage 170 (i.e., similar to a counter-bore). In this respect, the coating collector 92 (i.e., the enlarged cavity) collects any excess coating that enters the outlet passages 170, thereby preventing the coating from blocking the outlet passages 170. Although the coating collector 192 is described above in the context of the outlet passages 170, each of the outlet passages 172, 174 may also include the coating collector 192 as well.

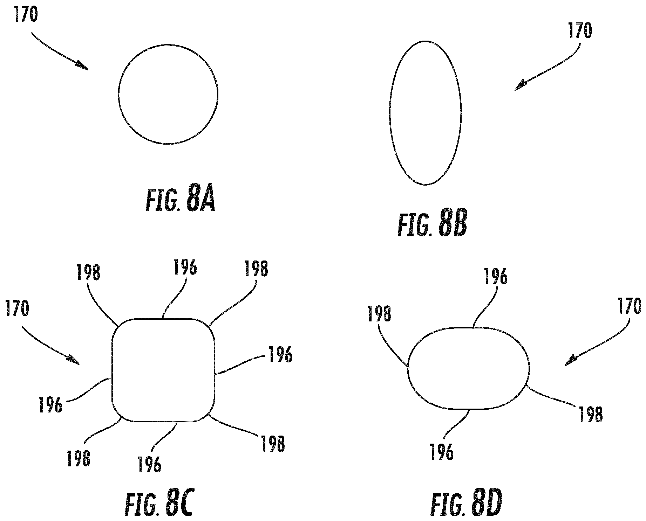

FIGS. 8A-8D illustrate several embodiments of the cross-sectional shape of the plurality of outlet passages 170. The plurality of outlet passages 172, 174 may also have similar cross-sections. More specifically, FIG. 8A illustrates one embodiment where the outlet passages 170 have a circular cross-section. FIG. 8B shows another embodiment where outlet passages 170 have an oval cross-section. FIG. 8C illustrates a third embodiment of the outlet passages 170. In this embodiment, the cross-section includes four straight portions 196 connected by four curved portions 198. As such, the cross-section is generally rectangular with curved corners. FIG. 8D illustrates a further embodiment of the outlet passages 170. The cross-section of this embodiment includes two straight portions 196 connected by two curved portions 198. In this respect, the cross-section appears as two hemispherical portions spaced apart by a rectangular portion. Nevertheless, the outlet passages 170 may have any suitable cross-section including any number of straight and/or curved portions 196, 198.

This written description uses examples to disclose the invention and also to enable any person skilled in the art to practice the invention, including making and using any devices or systems and performing any incorporated methods. The patentable scope of the invention is defined by the claims, and may include other examples that occur to those skilled in the art. Such other and examples are intended to be within the scope of the claims if they include structural elements that do not differ from the literal language of the claims, or if they include equivalent structural elements with insubstantial differences from the literal language of the claims.

## Claims

1. A rotor blade (100) for a gas turbine engine (10), comprising:
a platform (106) comprising a radially inner surface (168) and a radially outer surface (166);
a connection portion (102, 104) extending radially inwardly from the radially inner surface (168) of the platform (106); and
an airfoil (108) extending radially outwardly from the radially outer surface (166) of the platform (106) to an airfoil tip (112), the airfoil (108) comprising a leading edge portion (118) and a trailing edge portion (120) and including a pressure-side wall (114) and a suction-side wall (116) interconnected at the leading edge portion (118) and at the trailing edge portion (120); wherein
the platform (106), the airfoil (108), and the connection portion (102, 104) collectively define a cooling circuit (140) extending from an inlet (146) defined by the connection portion (102, 104) to a plurality of outlet passages (170, 172, 174) defined by the trailing edge portion (120) of the airfoil (108) at the interconnection between the pressure-side wall (114) and the suction-side wall (116);
a number (170) of the plurality of outlet passages (170, 172, 174) comprise an entrance (176) and an exit (178) radially inwardly offset from the entrance (176); and
the number (170) of outlet passages (170, 172, 174) comprising an entrance (176) and an exit (178) radially inwardly offset from the entrance (176) are all directed towards the platform (106).

2. The rotor blade (100) of claim 1, wherein one or more of the number of outlet passages (170) are partially defined by and extend through a radius (124) between the airfoil (108) and the platform (106).

3. The rotor blade (100) of claim 1 or 2, wherein one or more of the number of outlet passages (170) are partially defined by and extend through the platform (106).

4. The rotor blade (100) of claim 1, 2 or 3, wherein one of the plurality of outlet passages (170, 172, 174) comprises an entrance (184) and an exit (186) radially outwardly offset from the entrance (184) and another of the plurality of outlet passages (172) comprises an entrance (180) and an exit (182) radially aligned with the entrance (180).

5. The rotor blade (100) of claim 1, 2 or 3, wherein the number (170) of the plurality of outlet passages (170, 172, 174) comprise a first outlet passage (170a) extending between a first entrance (176a) and a first exit (178a) at a first angle (190(a)) and a second outlet passage (170b) extending between a second entrance (176b) and a second exit (178b) at a second angle (190(b)), and wherein the first angle (190(a)) and the second angle (190(b)) are different.

6. The rotor blade (100) of any preceding claim, wherein at least two outlet passages (170a, 170b) of the plurality of outlet passages (170, 172, 174) comprise different diameters (194a, 194b).

7. The rotor blade (100) of any preceding claim, wherein the outlet passage (174) comprising the entrance (184) and the exit (186) radially outwardly offset from the entrance (184) is positioned radially outwardly from the outlet passage (172) comprising the entrance (180) and the exit (182) radially aligned with the entrance (180), and wherein the outlet passage (172) comprising the entrance (180) and the exit (182) radially aligned with the entrance (180) is positioned radially outwardly from the at least one outlet passage (170) comprising the entrance (176) and the exit (178) radially inwardly offset from the entrance (176).

8. The rotor blade (100) of any preceding claim, wherein the cooling circuit (140) extends additionally to one or more outlet ports (162) defined by the airfoil tip (112).

9. The rotor blade (100) of any preceding claim, wherein at least one of the plurality of outlet passages (170, 172, 174) comprises a cross-sectional shape that is oval, elliptical, or includes one or more straight sides (196).

10. The rotor blade (100) of any preceding claim, wherein at least one of the plurality of outlet passages (170, 172, 174) comprises a coating collector (192).

11. A gas turbine engine (10), comprising
one or more rotor blades (100) according to any preceding claim.

## Patentansprüche

1. Rotorschaufel (100) für ein Gasturbinentriebwerk (10), umfassend:
eine Plattform (106), die eine radiale Innenoberfläche (168) und eine radiale Außenoberfläche (166) umfasst;
einen Verbindungsabschnitt (102, 104), der von der radialen Innenoberfläche (168) der Plattform (106) radial nach innen verläuft; und
ein Schaufelblatt (108), das von der radialen Außenoberfläche (166) der Plattform (106) zu einer Schaufelblattspitze (112) radial nach außen verläuft, wobei das Schaufelblatt (108) einen Vorderkantenabschnitt (118) und einen Hinterkantenabschnitt (120) umfasst und eine Druckseitenwand (114) und eine Saugseitenwand (116) einschließt, die an dem Vorderkantenabschnitt (118) und dem Hinterkantenabschnitt (120) miteinander verbunden sind; wobei
die Plattform (106), das Schaufelblatt (108) und der Verbindungsabschnitt (102, 104) gemeinsam einen Kühlkreislauf (140) definieren, der von einem durch den Verbindungsabschnitt (102, 104) definierten Einlass (146) zu einer Vielzahl von Auslasskanälen (170, 172, 174) verläuft, die durch den Hinterkantenabschnitt (120) des Schaufelblattes (108) an der Verbindung zwischen der Druckseitenwand (114) und der Saugseitenwand (116) definiert sind;
eine Anzahl (170) der Vielzahl von Auslasskanälen (170, 172, 174) einen Eingang (176) und einen von dem Eingang (176) radial nach innen versetzten Ausgang (178) umfasst; und
die Anzahl (170) der Auslasskanäle (170, 172, 174), die einen Eingang (176) und einen von dem Eingang (176) radial nach innen versetzten Ausgang (178) umfassen, alle auf die Plattform (106) gerichtet sind.

2. Rotorschaufel (100) nach Anspruch 1, wobei einer oder mehrere der Anzahl der Auslasskanäle (170) teilweise durch einen Radius (124) zwischen dem Schaufelblatt (108) und der Plattform (106) definiert sind und durch diesen verlaufen.

3. Rotorschaufel (100) nach Anspruch 1 oder 2, wobei einer oder mehrere der Anzahl der Auslasskanäle (170) teilweise durch die Plattform (106) definiert sind und durch diese verlaufen.

4. Rotorschaufel (100) nach Anspruch 1, 2 oder 3, wobei einer der Vielzahl von Auslasskanälen (170, 172, 174) einen Eingang (184) und einen von dem Eingang (184) radial nach außen versetzten Ausgang (186) aufweist und ein weiterer der Vielzahl von Auslasskanälen (172) einen Eingang (180) und einen radial fluchtend mit dem Eingang (180) ausgerichteten Ausgang (182) aufweist.

5. Rotorschaufel (100) nach Anspruch 1, 2 oder 3, wobei die Anzahl (170) der Vielzahl von Auslasskanälen (170, 172, 174) einen zwischen einem ersten Eingang (176a) und einem ersten Ausgang (178a) in einem ersten Winkel (190(a)) verlaufenden ersten Auslasskanal (170a) und einen zwischen einem zweiten Eingang (176b) und einem zweiten Ausgang (178b) in einem zweiten Winkel (190(b)) verlaufenden zweiten Auslasskanal (170b) umfassen, und wobei der erste Winkel (190(a)) und der zweite Winkel (190(b)) unterschiedlich sind.

6. Rotorschaufel (100) nach einem der vorstehenden Ansprüche, wobei mindestens zwei Auslasskanäle (170a, 170b) aus der Vielzahl der Auslasskanäle (170, 172, 174) unterschiedliche Durchmesser (194a, 194b) aufweisen.

7. Rotorschaufel (100) nach einem der vorstehenden Ansprüche, wobei der Auslasskanal (174), der den Eingang (184) und den von dem Eingang (184) radial nach außen versetzten Ausgang (186) umfasst, radial nach außen von dem Auslasskanal (172) positioniert ist, der den Eingang (180) und den radial fluchtend mit dem Eingang (180) ausgerichteten Ausgang (182) umfasst, und wobei der Auslasskanal (172), der den Eingang (180) und den radial fluchtend mit dem Eingang (180) ausgerichteten Ausgang (182) umfasst, von dem mindestens einen den Eingang (176) und den von dem Eingang (176) radial nach innen versetzen Ausgang (178) umfassenden Auslasskanal (170) radial nach außen positioniert ist.

8. Rotorschaufel (100) nach einem der vorstehenden Ansprüche, wobei der Kühlkreislauf (140) zusätzlich zu einer oder mehreren durch die Schaufelblattspitze (112) definierten Austrittsöffnungen (162) verläuft.

9. Rotorschaufel (100) nach einem der vorstehenden Ansprüche, wobei mindestens einer der Vielzahl von Auslasskanälen (170, 172, 174) eine Querschnittsform aufweist, die oval oder elliptisch ist oder eine oder mehrere gerade Seiten (196) aufweist.

10. Rotorschaufel (100) nach einem der vorstehenden Ansprüche, wobei mindestens einer der Vielzahl von Auslasskanälen (170, 172, 174) einen Beschichtungskollektor (192) umfasst.

11. Gasturbinentriebwerk (10), umfassend
eine oder mehrere Rotorschaufeln (100) nach einem der vorstehenden Ansprüche.

## Revendications

1. Pale de rotor (100) pour un moteur à turbine à gaz (10), comprenant :
une plate-forme (106) comprenant une surface radialement interne (168) et une surface radialement externe (166) ;
une partie de raccordement (102, 104) s'étendant radialement vers l'intérieur à partir de la surface radialement interne (168) de la plate-forme (106) ; et
un profil aérodynamique (108) s'étendant radialement vers l'extérieur à partir de la surface radialement externe (166) de la plate-forme (106) jusqu'à une extrémité de profil aérodynamique (112), le profil aérodynamique (108) comprenant une partie de bord d'attaque (118) et une partie de bord de fuite (120) et incluant une paroi côté pression (114) et une paroi côté aspiration (116) interconnectées au niveau de la partie de bord d'attaque (118) et au niveau de la partie de bord de fuite (120) ; dans laquelle
la plate-forme (106), le profil aérodynamique (108) et la partie de raccordement (102, 104) définissent collectivement un circuit de refroidissement (140) s'étendant d'une entrée (146) définie par la partie de raccordement (102, 104) jusqu'à une pluralité de passages de sortie (170, 172, 174) définis par la partie de bord de fuite (120) du profil aérodynamique (108) au niveau de l'interconnexion entre la paroi côté pression (114) et la paroi côté aspiration (116) ;
un nombre (170) parmi la pluralité de passages de sortie (170, 172, 174) comprennent une entrée (176) et une sortie (178) décalée radialement vers l'intérieur par rapport à l'entrée (176) ; et
le nombre (170) de passages de sortie (170, 172, 174) comprenant une entrée (176) et une sortie (178) décalée radialement vers l'intérieur par rapport à l'entrée (176) sont tous dirigés vers la plate-forme (106).

2. Pale de rotor (100) selon la revendication 1, dans laquelle un ou plusieurs parmi le nombre de passages de sortie (170) sont partiellement définis par et s'étendent à travers un rayon (124) entre le profil aérodynamique (108) et la plate-forme (106).

3. Pale de rotor (100) selon la revendication 1 ou 2, dans laquelle un ou plusieurs parmi le nombre de passages de sortie (170) sont partiellement définis par et s'étendent à travers la plate-forme (106).

4. Pale de rotor (100) selon la revendication 1, 2 ou 3, dans laquelle un parmi la pluralité de passages de sortie (170, 172, 174) comprend une entrée (184) et une sortie (186) décalée radialement vers l'extérieur par rapport à l'entrée (184) et un autre parmi la pluralité de passages de sortie (172) comprend une entrée (180) et une sortie (182) radialement alignée avec l'entrée (180).

5. Pale de rotor (100) selon la revendication 1, 2 ou 3, dans laquelle le nombre (170) de la pluralité de passages de sortie (170, 172, 174) comprennent un premier passage de sortie (170a) s'étendant entre une première entrée (176a) et une première sortie (178a) selon un premier angle (190(a)) et un deuxième passage de sortie (170b) s'étendant entre une deuxième entrée (176b) et une deuxième sortie (178b) selon un deuxième angle (190(b)), et dans laquelle le premier angle (190(a)) et le deuxième angle (190(b)) sont différents.

6. Pale de rotor (100) selon une quelconque revendication précédente, dans laquelle au moins deux passages de sortie (170a, 170b) de la pluralité de passages de sortie (170, 172, 174) comprennent des diamètres différents (194a, 194b).

7. Pale de rotor (100) selon une quelconque revendication précédente, dans laquelle le passage de sortie (174) comprenant l'entrée (184) et la sortie (186) décalée radialement vers l'extérieur par rapport à l'entrée (184) est positionné radialement vers l'extérieur par rapport au passage de sortie (172) comprenant l'entrée (180) et la sortie (182) radialement alignée avec l'entrée (180), et dans laquelle le passage de sortie (172) comprenant l'entrée (180) et la sortie (182) radialement alignée avec l'entrée (180) est positionné radialement vers l'extérieur par rapport à l'au moins un passage de sortie (170) comprenant l'entrée (176) et la sortie (178) décalée radialement vers l'intérieur par rapport à l'entrée (176).

8. Pale de rotor (100) selon une quelconque revendication précédente, dans laquelle le circuit de refroidissement (140) s'étend en outre vers un ou plusieurs orifices de sortie (162) définis par l'extrémité de profil aérodynamique (112).

9. Pale de rotor (100) selon une quelconque revendication précédente, dans laquelle au moins l'un parmi la pluralité de passages de sortie (170, 172, 174) comprend une forme en coupe transversale qui est ovale, elliptique, ou inclut un ou plusieurs côtés linéaires (196).

10. Pale de rotor (100) selon une quelconque revendication précédente, dans laquelle au moins l'un parmi la pluralité de passages de sortie (170, 172, 174) comprend un collecteur de revêtement (192).

11. Moteur à turbine à gaz (10), comprenant
une ou plusieurs pales de rotor (100) selon une quelconque revendication précédente.
